# FASCICULE DE BREVET EUROPEEN

(11) **EP 0 424 224 B1**
(45) Date de publication et mention de la délivrance du brevet: **04.01.1995**
(21) Numéro de dépôt: 90402862.8
(22) Date de dépôt: 12.10.1990
(51) Int. Cl.: C08J 9/02, C08L 79/08, C08G 73/12

(54) **Matériaux expansés à base de résine nadimide**
Expandierte Materialien auf Basis von Nadimidharz
Nadimide resin based expanded materials

(30) Priorité: 17.10.1989 FR 8913657
(43) Date de publication de la demande: 24.04.1991
(73) Titulaire: CENTRE D'ETUDE DES MATERIAUX ORGANIQUES POUR TECHNOLOGIES AVANCEES, F-69390 Vernaison (FR)
(72) Inventeur: Senneron, Michel, F-38240 Meylan (FR); Parrain, Gilbert, F-38790 Diemoze (FR); Rabilloud, Guy, F-38100 Grenoble (FR); Sillion, Bernard, F-69005 Lyon (FR)
(74) Mandataire: Andreeff, François

(56) Documents cités:
- FR-A- 2 102 796
- FR-A- 2 138 462
- FR-A- 2 610 938

## Description

La présente invention concerne le domaine des matériaux expansés souvent dénommés mousses ou matériaux cellulaires et plus particulièrement elle a pour objet des matériaux expansés thermostables et auto-extinguibles.

Les matériaux expansés de la présente invention sont obtenus à partir d'une composition comprenant au moins un oligomère thermodurcissable de type imide particulier dénommé dans la suite de la présente description nadimide, de type nadimide ou de type méthyl nadimide, caractérisé en ce qu'il est terminé par des groupes réactifs éthyléniques fixés sur des cycles imides préparés à partir de l'acide bicyclo[2,2,1]heptène-5 dicarboxylique-2,3, dénommé dans la suite de la présente description acide nadique, ou de l'un de ses dérivés tel que par exemple l'anhydride nadique, et les mono- ou les di-esters organiques de cet acide, et de l'acide méthyl-5 bicyclo [2,2,1] heptène-5 dicarboxylique-2,3 dénommé acide méthyl nadique, ou de l'un de ses dérivés. Les matériaux expansés de la présente invention sont obtenus par un procédé mettant en oeuvre la réaction de décomposition thermique des cycles norbornènes pour réaliser l'expansion du matériau.

Des matériaux cellulaires, rigides ou flexibles, à base de polyimides ont été fabriqués par de nombreuses méthodes, soit à partir de polymères linéaires de haute masse moléculaire, soit à partir d'oligomères, soit encore à partir de mélanges des réactifs monomères. L'une des plus ancienne technique, décrite entre autre dans les brevets US-A-3.249.561 et US-A-3.883.452 au nom de Du Pont de Nemours, consiste à fabriquer une mousse de polyimide à partir d'une solution de polyamide-acide en présence d'un agent qui se décompose, au cours du chauffage permettant la formation du polyimide, en libérant un gaz comme le dioxyde de carbone ou le monoxyde de carbone. Ce procédé est relativement délicat à mettre en oeuvre car le polymère de départ est en solution diluée dans un solvant organique polaire et qu'il faut gouverner simultanément l'évaporation du solvant, la réaction d'imidation et la formation de la structure cellulaire. Avec les polyimides thermoplastiques comme les polyétherimides, vendus par la société General Electric sous le nom commercial d'Ultem,c'est l'addition d'un agent porophore qui a été utilisée pour créer la structure cellulaire, comme cela est décrit par exemple dans le brevet US-A-4.732.263 au nom de Mobil Oil. Une autre méthode, décrite dans le brevet US-A-4.077.922 de la société Upjohn, consiste à mélanger ce type de polyimides avec des microsphères de verre.

La méthode qui a fait l'objet d'un très grand nombre de publications consiste à synthétiser les polyimides en faisant réagir sur une diamine ou sur un mélange de plusieurs diamines un bis(*ortho*-acide-ester) aromatique à la place d'un dianhydride aromatique. Cette réaction donne, par chauffage à haute température, des polyimides avec libération d'une molécule d'eau et d'une molécule d'alcool pour chaque cycle imide formé. Ces deux composés volatils servent d'agents porophores dans la fabrication des matériaux cellulaires en polyimides. Comme la quantité de produits volatils libérée est relativement importante, la réaction est généralement conduite en deux étapes. Une première réaction de polycondensation partielle est effectuée en solution pour former des oligomères imides qui sont isolés sous forme de poudre par précipitation dans un milieu non-solvant. C'est cette poudre fusible qui, éventuellement mélangée à divers additifs, est placée dans un moule et chauffée au-dessus de sa température de fusion. L'expansion du matériau est provoquée par la poursuite de la réaction de polycondensation.

Cette technique de fabrication a été utilisée avec de nombreux mélanges de monomères. On peut citer, à titre d'exemple d'illustration de cette méthode, le brevet US-A-3.502.712 dans lequel il est décrit la réaction d'un diester de l'acide benzophénonetétracarboxylique-3,3',4,4' avec la *méta*-phénylènediamine. L'utilisation d'un mélange de diamines, en vue de former des mousses de polyimides plus souples, comprenant des diamines aromatiques et des diamines flexibles comme les acrylonitrile-butadiène-diamines est par exemple décrite dans le brevet US-A-4.456.862 ou les diamino-poly(diméthylsiloxanes) dans le brevet US-A-4.535.099.

Les différentes méthodes exposées ci-avant permettent de fabriquer des mousses thermostables en polyimides ayant des caractéristiques très variées. Elles peuvent être rigides, semi-flexibles ou flexibles selon la nature des monomères ou des polymères employés pour les préparer. Elles ont généralement une porosité ouverte, mais dans certains cas celle-ci peut être fermée, et elles couvrent un assez large domaine de densité et de résistance à la compression.

Mais, d'une façon générale, la plupart de ces procédés de fabrication demande un contrôle sévère des conditions de synthèse des polymères et du protocole de mise en oeuvre de ces polymères pour obtenir des résultats reproductibles.

Les résines de polyimides dites "résines nadimides" ont pour application principale la fabrication de matériaux composites à base de tissu de verre ou de fibres de carbone. Elles ont été décrites notamment dans la demande de brevet européen EP A-283330, au nom de la demanderesse. Leur mise en oeuvre est faite avec un cycle thermique très précis, d'abord sous vide, et ensuite sous pression. La polymérisation des doubles liaisons nadiques est assez complexe car plusieurs réactions se superposent à la simple polymérisation par addition. L'une de ces réactions est une réaction de rétro Diels-Alder au cours de laquelle le cycle nadimide se transforme en cycle maléimide avec libération d'une molécule de cyclopentadiène comme schématisé par l'équation 3 ci-après : 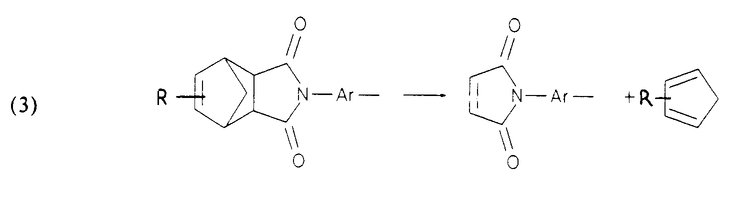
Si la réaction de polymérisation thermique est effectuée sous pression, le cyclopentadiène formé dans cette réaction peut se copolymériser avec les doubles liaisons maléiques et entrer ainsi dans la structure macromoléculaire du réseau tridimentionnel final. Si, au contraire, la réaction de polymérisation thermique est réalisée sans appliquer de pression ou sous vide, une partie du cyclopentadiène est éliminée sous forme gazeuse et la structure du réseau est un peu différente.

Il pouvait être intéressant d'essayer de mettre à profit la réaction de formation du cyclopentadiène, qui se produit à haute température, pour assurer l'expansion de la résine et former un matériau expansé à partir de ces polymères de type nadimide, le cyclopentadiène jouant ainsi le rôle d'un agent porophore. Cependant les résines nadimides, en particulier celles de type polyimides, ont habituellement une masse moléculaire en nombre relativement faible, inférieure à 5 000, et les matériaux expansés obtenus à partir de ces produits sont habituellement rigides et friables.

On a maintenant découvert de façon surprenante qu'il était possible d'obtenir, dans certaines conditions, des matériaux expansés présentant des propriétés améliorées, par un procédé utilisant la formation de cyclopentadiène lors du chauffage à haute température d'une résine oligomère thermodurcissable à terminaisons nadimides. Dans les conditions qui seront définies ci-après, la fabrication d'un matériau expansé présente l'avantage d'être d'une mise en oeuvre très facile et de permettre, en particulier dans le cas de l'utilisation de résines nadimides thermostables, telles que par exemple les résines nadimides de type polyimides, l'obtention d'un matériau expansé ayant une excellente stabilité thermique,ce qui n'était que très difficilement réalisable avec les procédés de l'art antérieur.

On a également découvert, et c'est là un objet particulier de la présente invention, que pour une masse moléculaire donnée, l'addition à la résine nadimide d'au moins une petite quantité d'un polymère linéaire thermoplastique, de préférence thermostable, permettrait d'obtenir de façon surprenante des matériaux expansés ayant des propriétés mécaniques améliorées par rapport à celles des matériaux expansés formés à partir d'une composition contenant une résine nadimide et ne contenant pas de polymère linéaire thermoplastique.

D'une manière générale, les matériaux expansés de l'invention peuvent être définis en ce qu'il sont obtenus par un procédé comprenant le chauffage d'une composition comprenant : de 50 à 99% en poids d'au moins une résine oligomère thermodurcissable à terminaisons nadimide ou méthyl-nadimide, obtenues à partir de l'acide bicyclo- [2, 2,1] heptène-5 dicarboxylique -2,3 (acide nadique) ou un de ses dérivés et de l'acide méthyl-nadique ou un de ses dérivés, ladite résine ayant une masse moléculaire moyenne en nombre de 1 000 à 10 000 et étant représentée par la formule générale. 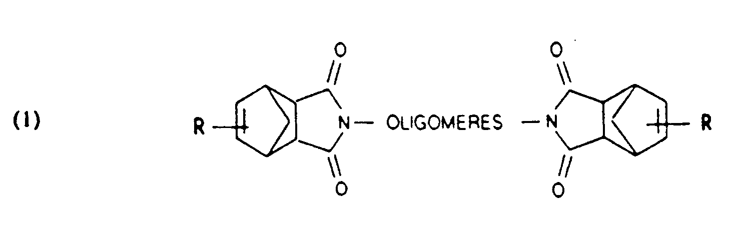
dans laquelle la partie centrale "OLIGOMERES" représente un polymère ou un mélange de polymères choisi parmi les polyamides, les polyesters, les polyéthers, les polycétones, les polysulfones, les polysulfures et les polyimides dont la masse moléculaire moyenne en nombre est de 600 à 10 000, et de 1 à 50% en poids d'au moins un polymère linéaire thermoplastique choisi parmi les polysulfures, les polyéther-imides, les polyimides arylaliphatiques linéaires, les polyimide-siloxanes, les polyéther-cétones et les polysulfones, ledit chauffage étant effectué à une température et pendant une durée suffisantes pour réaliser la réaction de décomposition thermique des cycles norbornènes avec dégagement de cyclopentadiène provoquant l'expansion de ladite composition, la pression étant inférieure à celle à laquelle le cyclopentadiène ne se dégage plus.

Pour des raisons de stabilité thermique de l'édifice macromoléculaire, on préfère utiliser des résines nadimides fusibles de type polyimide. De telles résines peuvent être représentées par la formule générale suivante : 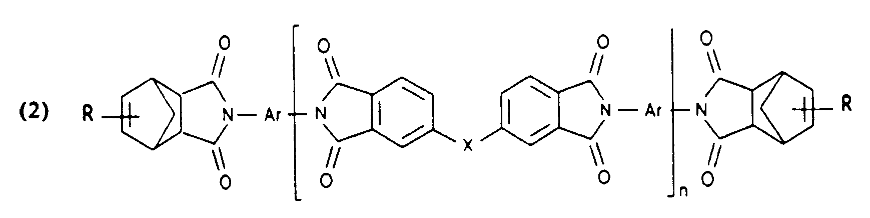
dans laquelle Ar, X, n et R sont définis comme indiqué ci-après. Dans cette formule, Ar représente un radical aromatique divalent carbocyclique ou hétérocyclique, dont les deux valences sont situées sur des atomes de carbone distincts de préférence non situés en position ortho l'un par rapport a l'autre. Le radical Ar peut ètre formé d'un cycle ou de plusieurs cycles, par exemple de deux a six cycles, qui sont alors accolés ou reliés entre eux, chaque cycle étant formé de préférence de cinq a sept atomes dont une partie peut consister en atomes d'oxygène, de soufre et/ou d'azote, les autres étant des atomes de carbone. Lorsque le radical Ar comporte plusieurs cycles reliés entre eux, les éléments de liaison sont par exemple la liaison simple ou l'un des atomes ou groupements suivants:
-O- ; -S- ; -SO-; -SO₂- ; -CH₂- ; -CF₂- ; -C(CH₃)₂- ; -C(CF₃)₂- ; -COO- ; -CHOH-.
Dans cette formule (2), le radical R représente un atome d'hydrogène ou un radical méthyle le symbole X qui relie entre eux les deux cycles de la partie polyimide aromatique de la molécule représente une liaison simple ou l'un des atomes ou groupements d'atomes définis ci-avant : le symbole n représente le degré de polycondensation de la chaîne principale des polyimides aromatiques. La masse moléculaire de ces compositions de polyimides terminés par des groupes réactifs éthyléniques peut être ajustée en faisant varier les proportions des différents réactifs utilisés pour leur fabrication, tout en respectant la stoechiométrie globale entre les fonctions amine et les groupes antagonistes acide ou ester des composés carboxyliques mis en jeu.

La valeur exacte du nombre n n'est pas directement accessible car les compositions utilisées dans la présente invention sont formées d'un mélange d'oligomères dont les masses moléculaires sont statistiquement distribuées autour d'une valeur moyenne qui est fixée par les proportions respectives des divers réactifs mis en jeu et par la méthode de synthèse utilisée. La préparation des résines nadimides de formule (2) fait généralement intervenir trois réactifs, un dérivé d'un acide aromatique tétracarboxylique, une diamine aromatique et un dérivé de l'acide nadique ou de l'acide méthyl-nadique. L'examen de la formule générale (2) montre que la valeur moyenne du nombre n peut cependant être facilement calculée à partir des quantités de chacun des réactifs utilisés. Il faut en effet pour n moles de composé tétracarboxylique, n+1 moles de diamine aromatique primaire et 2 moles d'un dérivé de l'acide nadique ou méthyl-nadique.

Parmi les systèmes macromoléculaires répondant à la formule (2) ci-avant, on utilise très avantageusement des oligomères de type polybenzhydrolimides et par exemple ceux décrits dans la demande de brevet européen au nom de la demanderesse EP-A-283330 citée plus haut. Ces oligomères sont par exemple préparés suivant la technique décrite dans cette demande de brevet.

Selon un premier mode de mise en oeuvre de l'invention, on peut envisager de réaliser des matériaux expansés thermostables à partir d'une composition consistant essentiellement en au moins une résine nadimide ou méthyl-nadimide ayant une masse moléculaire moyenne en nombre dans la gamme de 6 000 à 10 000, sans mettre en jeu de polymère linéaire thermoplastique. Les matériaux expansés peuvent alors être formés, en atmosphère inerte ou sous air, sous une pression inférieure à la pression atmosphérique, égale à la pression atmosphérique ou même supérieure à la pression atmosphérique. D'une façon préférée, on opère sous air à la pression atmosphérique ou dans une gamme de valeur de pression allant de 0,08 MPa à 0,12 MPa.

A titre d'exemples de polymères linéaires thermoplastiques utilisables dans la présente invention on peut citer les polyétherimides tels que par exemple ceux vendus sous le nom commercial Ultem par la société General Electric, les polysulfures, par exemple le polysulfure de phénylène, les polyimides aryl-aliphatiques linéaires, les polyimides aromatiques, les polyimides-siloxanes, les polyéthers-cétones, et les polysulfones, par exemple les polyéther-sulfones.

La quantité de polymère linéaire thermoplastique qui est ajoutée à la résine nadimide dépend de la nature du polymère linéaire thermoplastique et de la taille moyenne des pores que l'on désire obtenir dans le matériau expansé final. On utilise le plus souvent un polymère linéaire thermoplastique thermostable choisi dans le groupe formé par les polyétherimides, les polyéther-sulfones et les polyimides arylaliphatiques. La proportion de polymère linéaire thermoplastique dans la composition de départ est le plus souvent de 1 à 20 % en poids, la résine nadimide représentant alors de 80 à 99% en poids.

Comme précédemment, les matériaux expansés peuvent être formés, en atmosphère inerte ou sous air, sous une pression inférieure à la pression atmosphérique, égale à la pression atmosphérique ou même supérieure à la pression atmosphérique. D'une façon préférée, on opère sous air à la pression atmosphérique ou dans une gamme de valeur de pression allant de 0,08 MPa à 0,12 MPa.

Les matériaux expansés selon la présente invention sont obtenus par expansion d'une composition contenant au moins une résine nadimide ou méthyl-nadimide, et au moins un polymère linéaire thermoplastique, selon un procédé basé sur la mise en oeuvre à haute température desdites compositions sous forme solide, le plus souvent dans un moule ayant de préférence les dimensions de l'objet à fabriquer, en particulier lorsque celui-ci a une forme relativement simple. Cette mise en oeuvre à haute température comprend le chauffage de la composition dans des conditions permettant le dégagement de cyclopentadiène : ce chauffage comprendra de préférence une étape finale d'une durée d'au moins 30 minutes à une température de 210°C à 350°C avec une pression voisine de la pression atmosphérique (par exemple de 0,08 à 0,12 MPa). Comme les matériaux expansés obtenus à partir d'une composition comprenant au moins une résine nadimide ou méthyl-nadimide et au moins un polymère linéaire thermoplastique ont d'excellentes propriétés mécaniques, ils peuvent aussi être fabriqués sous forme de blocs par exemple prismatiques dans lesquels on peut usiner l'objet à fabriquer.

La mise en oeuvre à haute température des compositions de la présente invention peut se faire par exemple selon l'une des trois variantes suivantes :
a) Les deux composants sont mis en solution soit dans le même solvant, soit dans des solvants différents mais miscibles entre eux et les deux solutions sont mélangées intimement. On utilise en général un seul solvant, le plus souvent la N-méthylpyrrolidone ou le diglyme. La solution finale ainsi obtenue est introduite dans un moule qui est placé dans une étuve à vide. Le solvant est évaporé sous pression réduite, par exemple à une température de l'ordre de 150°C, de manière à obtenir au fond du moule une couche solide résineuse qui est habituellement de couleur brun clair. Le moule est alors chauffé à la pression atmosphérique pendant 30 minutes à environ 245°C, puis par exemple pendant 1 heure à environ 300°C. C'est au cours de ce traitement thermique en deux étapes qu'il y a expansion du matériau et formation du réseau tridimensionnel.
b) Les deux composants broyés en poudres fines sont mélangés dans un mélangeur à poudre par exemple pendant 2 heures. Ce mélange est placé dans le moule et porté, à la pression atmosphérique, par exemple à environ 245°C-250°C, puis maintenu à cette température par exemple durant environ 30 minutes, puis on augmente la température, par exemple jusqu'à 300°C, et on maintient ce mélange à cette température par exemple durant 1 heure.
c) Les deux composants sont mis en solution comme décrit dans la variante a) et cette solution est versée dans un liquide, par exemple un liquide organique, non solvant des polymères mais de préférence miscible avec le ou les solvants des polymères (tel que l'hexane ou le méthanol) avec une très forte agitation. Il se forme dans ces conditions une poudre très fine qui est isolée, par exemple par filtration, et séchée, par exemple sous pression réduite. C'est cette poudre qui est ensuite utilisée pour préparer le matériau expansé par un traitement thermique identique à celui décrit dans la variante b).

La densité des matériaux expansés obtenus par l'une ou l'autre de ces variantes dépend à la fois de la composition chimique des polymères et de la composition pondérale du mélange.

L'invention sera décrite de façon plus précise par les exemples spécifiques donnés ci-après à titre illustratif. On décrit tout d'abord la préparation de la résine nadimide de base utilisée dans les exemples. Une des résines nadimides de base est une résine de type polyimide préparée à partir de 3,08 moles de méthylènebis(benzèneamine)-4,4', de 2 moles de monoester de méthyle de l'acide nadique et de 2,08 moles de diester de méthyle de l'acide benzhydroltétracarboxylique-3,3',4,4' dans le diglyme comme solvant de réaction en suivant le même mode opératoire que celui qui est décrit dans l'exemple 3 de la demande de brevet EP-A-283330 de manière à obtenir une solution à 60% en poids de matière sèche.

### Exemple 1 (comparatif)

100 grammes d'une solution obtenue comme décrit ci-dessus sont versés lentement dans un récipient contenant 250 grammes d'hexane maintenu sous très forte agitation avec un agitateur-broyeur à couteaux de type Ultra-Turax. Le broyage est poursuivi pendant 10 minutes après la fin de l'addition de la solution de résine nadimide. Le solide obtenu est isolé par filtration puis remis en suspension dans 250 grammes d'hexane sous faible agitation pendant 15 heures. Le solide est ensuite isolé par filtration, lavé sur le filtre avec de l'hexane et séché sous pression réduite égale à 15 mm de mercure (2000 Pascals) pendant 15 heures à 120°C, puis pendant 3 heures à 150°C et enfin pendant 5 heures à 160°C. La quantité de diglyme résiduel, mesurée par résonance magnétique nucléaire, est inférieure à 1% en poids.

Pour la mise en oeuvre du matériau, on dépose 23 grammes de cette poudre en couche uniforme dans un moule métallique cylindrique ayant un diamètre de 67 mm. Le moule est placé dans une étuve et soumis au traitement thermique suivant :
- Montée en température jusqu'à 245°C en 30 minutes,
- Palier à cette température durant 30 minutes,
- Montée en température jusqu'à 300°C en 20 minutes,
- Palier à 300°C pendant 2 heures, puis
- Refroidissement rapide jusqu'à la température ambiante.

Le matériau expansé obtenu à la fin de ce traitement thermique à une masse volumique de 0,15 g.cm⁻³, il est relativement friable, le diamètre des pores n'est pas homogène et varie entre environ 0.5 mm et 5 mm au sein de la masse. Bien que ce matériau ait une excellente stabilité thermique (il ne montre par exemple aucune perte de poids après un vieillissement à l'air dans une étuve à ventilation forcée pendant 500 heures à 250°C) et qu'il soit autoextinguible, il présente une faible résistance à l'effritement et de mauvaises propriétés mécaniques en compression, contrainte maximale : 0,3 MPa, allongement : 5 %, module d'élasticité : 5,5 MPa.

### Exemple 2

On prépare séparément les deux solutions suivantes :
a) Une solution de 45,5 grammes d'Ultem, vendu par la société General Electric, dans 84,5 grammes de N-méthylpyrrolidone et,
b) Une solution de 50 grammes de la résine nadimide de base dans 50 grammes de N-méthylpyrrolidone.

On prépare ensuite une composition en mélangeant 21,5 grammes de la solution a) à la solution b). On obtient ainsi une solution contenant 50 grammes de résine nadimide et 7,5 grammes d'Ultem, la proportion pondérale de ce dernier polymère par rapport à la quantité totale de matière sèche est d'environ 13%. La solution contenant les deux composés est chauffée, sous agitation, pendant 1 heure à 140°C sous pression atmosphérique. Après refroidissement, elle est précipitée dans l'hexane suivant la procédure de l'exemple 1.

La poudre obtenue est placée dans un moule identique à celui employé dans l'exemple 1 et soumise au traitement thermique décrit dans cet exemple. On obtient une mousse de polyimide homogène dont les pores, au sein de la masse, ont un diamètre relativement uniforme d'environ 2 mm. Ce matériau a une masse volumique de 0,2 g.cm⁻³, il a une stabilité thermique à 250°C identique à celle qui a été mesurée pour le matériau expansé de l'exemple 1 et il est aussi autoextinguible. Il a en outre une bonne résistance à l'effritement et une excellente stabilité dimensionnelle jusqu'à 350°C.

### Exemple 3

On prépare une composition par dissolution successive de 50 grammes de la résine nadimide de base, puis de 2,5 grammes d'Ultem dans 75 grammes de N-méthylpyrrolidone. La solution est chauffée pendant 2 heures à 120°C, puis refroidie et précipitée dans du méthanol sous très forte agitation. Après filtration et séchage, la composition de polyimide, contenant environ 4,7% en poids d'Ultem, est expansée dans un moule en suivant le traitement thermique décrit dans l'exemple 1.

Le matériau cellulaire obtenu a une masse volumique de 0,18 g.cm⁻³, un diamètre de pores variant entre 1 et 2 mm et une distribution des pores homogène au sein de la masse. Ce matériau a une excellente stabilité thermique, il ne subit aucune perte de poids par exemple pendant 1000 heures à 220°C, 500 heures à 250°C ou 200 heures à 300°C et il est de plus autoextinguible. Il a également une très bonne résistance à l'effritement et une excellente stabilité dimensionnelle jusqu'à 350°C.

### Exemple 4

On procède comme dans l'exemple 3, en utilisant 2,63 grammes d'Ultem. La solution, après refroidissement, est précipitée dans 500 ml d'hexane sous très forte agitation. La composition de résine nadimide contient 5 % en poids d'Ultem. Le matériau cellulaire obtenu après expansion comme décrit dans l'exemple 1 a une masse volumique de 0,16 g.cm⁻³. De plus, il a des propriétés analogues à celles indiquées pour le matériau de l'exemple 3.

### Exemple 5

On prépare une composition par dissolution de 50 grammes de résine nadimide de base et de 2,63 grammes d'un poly(éther-sulfone), obtenu par réaction du dichloro-4,4' diphénylsulfone sur le bisphénol A, dans 100 grammes de N-méthylpyrrolidone. Après chauffage 1 heure à 120°C, la solution est précipitée dans 500 cm³ d'hexane sous forte agitation. Après filtration, lavage et séchage, la composition, contenant 5 % en poids de poly(éther-sulfone), est expansée dans un moule suivant l'exemple 1. Le matériau cellulaire obtenu a une masse volumique de 0,18 g.cm⁻³ et un diamètre de pores inférieur à 1 mm. Ses autres propriétés sont analogues à celles du matériau de l'exemple 3.

### Exemple 6

On prépare une composition par dissolution successive de 50 grammes de la résine nadimide de base, puis de 2,6 grammes d'un poly(éther-sulfone) vendu sous la marque de commerce Udel par la société Union Carbide, dans 75 grammes de N-méthylpyrrolidone. La solution est chauffée pendant 1 heure à 120°C, puis refroidie et précipitée dans du méthanol sous très forte agitation. Après filtration et séchage, la composition de résine nadimide, qui contient environ 4,9 % en poids de poly(éther-sulfone), est expansée dans un moule en suivant le traitement thermique de l'exemple 1. Le matériau cellulaire obtenu a une masse volumique de 0,16 g.cm⁻³, des pores homogènes de diamètre inférieur à 1 mm. Ce matériau a une excellente stabilité thermique, il résiste à une température de 250°C pendant 200 heures. Il a également une bonne résistance à l'effritement et une excellente stabilité dimensionnelle jusqu'à 350°C.

### Exemple 7

On procède comme dans l'exemple 6, mais en utilisant 1,55 grammes de poly(éther-sulfone) Udel. La composition de résine contient 3 % en poids de poly(éther-sulfone). Le matériau expansé obtenu a une masse volumique de 0,23 g.cm⁻³. Ses autres propriétés sont analogues à celles du matériau de l'exemple 6.

### Exemple 8

On prépare une composition par dissolution successive dans 50 grammes de diglyme de 50 grammes de la résine nadimide de base, puis de 1,02 grammes (soit 2% en poids) d'un polyimide aryl-aliphatique linéaire préparé par polycondensation du diester de méthyle de l'acide benzhydrol-tétracarboxylique-3,3',4,4' et du diamino-1,12 dodécane dans des conditions classiques, telles que celles décrites par exemple dans la demande de brevet européen au nom de la demanderesse EP-A-232665. La solution obtenue est chauffée pendant 2 heures à 100°C, puis refroidie et précipitée dans du méthanol sous très forte agitation. Après filtration et séchage, la composition de polyimide est expansée dans un moule en suivant le mode opératoire décrit dans l'exemple 1. Le matériau cellulaire obtenu a une masse volumique de 0,19 g.cm⁻³ et des pores homogènes de diamètre inférieurs à 1 mm. Ce matériau a une bonne stabilité thermique, il résiste par exemple à une température de 220°C pendant 500 heures sans perte de poids. Il a également une bonne résistance à l'effritement. Il présente enfin une excellente stabilité dimensionnelle jusqu'à 350°C.

### Exemple 9

On prépare une composition en mélangeant dans un broyeur à boulets 50 grammes de la résine nadimide de base et 1 gramme du polyimide aryl-aliphatique linéaire décrit dans l'exemple 8 (soit 1,96 % en poids). Le mélange de poudres, expansé dans un moule en suivant le processus décrit dans l'exemple 1, donne un matériau cellulaire homogène qui a une masse volumique de 0,19 g.cm⁻³, des pores homogènes de diamètre inférieur à 1 mm et une très bonne résistance à l'effritement. Ce matériau a une bonne stabilité thermique (pas de perte de poids après 200 heures à 250°C) et une excellente stabilité dimensionnelle jusqu'à 350°C.

### Exemple 10

On prépare séparément les deux solutions suivantes :
a) une solution de 3,5 grammes d'Ultem, vendu par la société General Electric, dans 8 grammes de N-méthylpyrrolidone et,
b) une solution de 50 grammes de la résine nadimide de base dans 50 grammes de N-méthylpyrrolidone. On prépare ensuite une composition en mélangeant la solution a) à la solution b). On obtient ainsi une solution contenant 50 grammes de résine nadimide et 3,5 grammes d'Ultem, la proportion pondérale de ce dernier polymère par rapport à la quantité totale de matière sèche est d'environ 6,6% en poids. Cette dernière solution est introduite dans un moule qui est ensuite placé dans une étuve à vide. Le solvant est alors évaporé sous pression réduite de 15 mm de mercure (soit environ 2 000 Pascals) par chauffage jusqu'à une température de l'ordre de 150°C; on obtient ainsi au fond du moule une couche solide résineuse de couleur brun clair. Le moule est alors chauffé à la pression atmosphérique suivant le protocole décrit dans l'exemple 1. On obtient une mousse de polyimide homogène dont les pores, au sein de la masse, ont un diamètre uniforme d'environ 2 mm. Ce matériau a une masse volumique de 0,19 g.cm⁻³, il a une stabilité thermique identique à celle du matériau expansé décrit dans l'exemple 2, une bonne résistance à l'effritement et une excellente stabilité dimensionnelle jusqu'à 350°C.

### Exemple 11

On prépare une composition par dissolution successive de 50 g de résine méthylnadimide (préparé par réaction de 3,08 moles de méthylène bis(benzèneamine)-4,4', de 2 moles de monoester de méthyle de l'acide méthyl-nadique et de 2,08 moles de diester de méthyle de l'acide benzhydrol tétracarboxylique-3,3',4,4' dans le diglyme) et de 2,5 grammes d'Ultem dans 60 grammes de N-méthylpyrolidone. La solution est chauffée pendant 1 h à 60°C, puis refroidie et précipitée dans le méthanol sous forte agitation. Après filtration et séchage, la composition de polyimide, contenant environ 4,7 % en poids d'Ultem, est expansée dans un moule en suivant le traitement thermique de l'exemple 1.

Le matériau cellulaire obtenu possède une masse volumique de 0,25 g.cm⁻³, le diamètre des pores varie de 1 à 3 mm. Ce matériau auto-extinguible possède une excellente thermostabilité thermique : il ne subit aucune perte de poids après 500 heures à 200°C.

### Exemple 12

On a déterminé les propriétés mécaniques en compression en au cisaillement des matériaux expansés préparés dans les exemples 4, 5, 7, et 8. Les résultats sont donnés dans les tableaux 1 et 2 qui suivent. Dans le tableau 1, on a rappelé la densité (ou masse volumique) du matériau. Les propriétés mécaniques en compression (contrainte maximale, allongement et module d'élasticité) sont bien supérieures à celles du matériau dont la préparation est décrite dans l'exemple 1.

**Tableau 1**

| (Compression) | | | | |
|---|---|---|---|---|
| MATERIAU de l'exemple | 4 | 5 | 8 | 7 |
| | + 5 % Ultem | + 5 % polyéthersulfone | + 2 % polyimide C12 | + 3 % Udel |
| DENSITE | 0,16 | 0,18 | 0,19 | 0,23 |
| CONTRAINTE MAXIMALE MPa | 1,7 | 2,1 | 2,4 | 3,2 |
| CONTRAINTE SPECIFIQUE MPa | 11 | 12 | 13 | 14 |
| ALLONGEMENT % | 6,5 | 3,9 | 8 | 5,5 |
| MODULE D'ELASTICITE MPa | 40 | 60 | 49 | 97 |
| MODULE SPECIFIQUE MPa | 250 | 330 | 260 | 420 |

**Tableau 2**

| (Cisaillement) | | | | |
|---|---|---|---|---|
| MATERIAU de l'exemple | 4 | 5 | 8 | 7 |
| | + 5 % Ultem | + 5 % polyéthersulfone | + 2 % polyimide C12 | + 3 % Udel |
| DENSITE | 0,16 | 0,18 | 0,19 | 0,23 |
| CONTRAINTE EN CISAILLEMENT MPa | 1,2 | 1,3 | 1,8 | 1,7 |
| CONTRAINTE SPECIFIQUE MPa | 7,5 | 7 | 9,5 | 7,5 |

## Revendications

1. Matériau expansé caractérisé en ce qu'il est obtenu par un procédé comprenant le chauffage d'une composition comprenant : de 50 à 99% en poids d'au moins une résine oligomère thermodurcissable à terminaisons nadimide ou méthyl-nadimide, obtenues à partir de l'acide bicyclo- [2, 2,1] heptène-5 dicarboxylique-2, 3 (acide nadique) ou un de ses dérivés et de l'acide méthyl-nadique ou un de ses dérivés, ladite résine ayant une masse moléculaire moyenne en nombre de 1000 à 10 000 et étant représentée par la formule générale 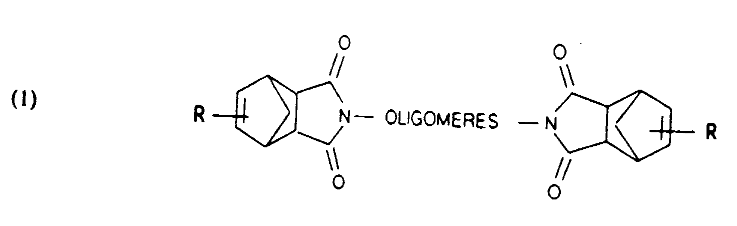 dans laquelle la partie centrale "OLIGOMERES" représente un polymére ou un mélange de polyamères choisi parmi les polyamides, les polyesters, les polyéthers, les polycétones, les polysulfones, les polysulfures et les polyamides dont la masse moléculaire moyenne en nombre et de 600 à 10 000; et de 1 à 50% en poids d'au moins un polymère linéaire thermoplastique choisi parmi les polysulfures, les polyéther-imides, les polyimides arylaliphatiques linéaires, les polyimide-siloxanes, les polyéther-cétones et les polysulfones, ledit chauffage étant effectué à une température et pendant une durée suffisante pour réaliser la réaction de décomposition thermique des cycles norbornèmes avec dégagement de cyclopentadiène provoquant l'expansion de ladite composition, la pression étant inférieure à celle à laquelle le cyclopentadiène ne se dégage plus.

2. Matériau expansé selon la revendication 1, caractérisé en ce que ladite résine oligomère à terminaisons nadimide ou méthyl-nadimide est choisi parmi les polyimides répondant à la formule générale 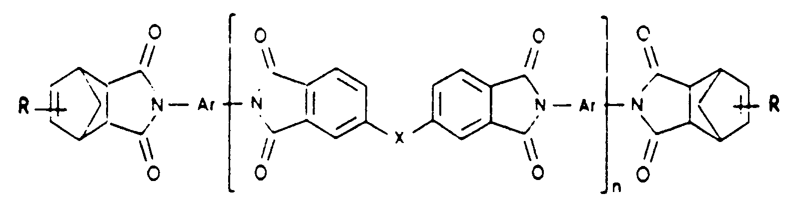 dans laquelle Ar représente un radical aromatique divalent carbocyclique ou hétérocyclique, dont les deux valences sont situées sur des atomes de carbone distincts, X représente une liaison simple ou un atome ou groupement divalent choisi parmi :-O- ; -S- ; -SO- ; -SO₂- ; -CH₂- , -CF₂- , -C(CH₃)₂- ; -C(CF₃)₂- ; -COO- ; CHOH-, n représente le degré de polycondensation de la chaîne de polyimide et R représente un atome d'hydrogène ou un radical méthyle.

3. Matériau expansé selon la revendication 2, caractérisé en ce que ladite résine oligomère à terminaisons nadimide ou méthyl-nadimide est de type polybenzhydrolimide, X représentant -CHOH- dans la formule.

4. Matériau expansé selon l'une des revendications 1 à 3, caractérisé en ce que ledit polymère linéaire thermoplastique est un polyéther-imide, un polyimide arylaliphatique ou un polyéther-sulfone.

5. Matériau expansé selon l'une des revendications 1 à 4, caractérisé en ce que ladite composition comprend de 80 à 99% en poids d'au moins une résine oligomère à terminaisons nadimide ou méthyl-nadimide et de 1 à 20% en poids d'au moins un polymère linéaire thermoplastique.

6. Matériau expansé selon l'une des revendications 1 à 5, caractérisé en ce que ledit chauffage de ladite composition comprend une étape finale d'au moins 30 minutes à une température de 210°C à 350°C.

7. Matériau expansé selon l'une des revendications 1 à 6, caractérisé en ce que ledit chauffage est effectué sous une pression de 0,08 à 0,12 MPa.

## Claims

1. Expanded material characterized in that it is obtained a process comprising by heating composition comprising 50 to 99% by weight of at least one thermosetting oligomer resin, with nadimide or methyl-nadimide ends, obtained from [2, 2,1] bicyclo 5-heptene 2,3 dicarboxylic acid (nadic acid) or one of its derivatives and methyl nadic acid or one of its derivatives, said resin having an number average molecular weight of 1000 to 10,000 and being represented by the general formula 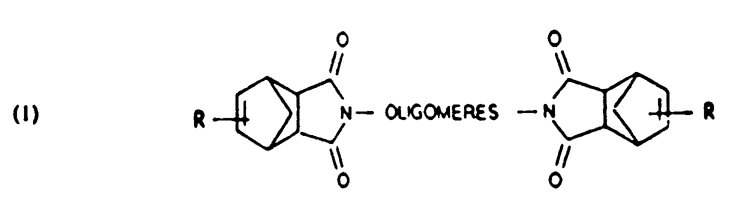 in which a central part "oligomers" represents a polymer or a mixture of polymers chosen from polyamides polyesters, polyethers, polyketones, polysulfones, polysulfides and polyamides whose number average molecular weight is 600 to 10,000: and of 1 to 50% by weight of at least one thermoplastic linear polymer chosen from polysulfides, polyetherimides, linear arylaliphatic polyimides, polyimidesiloxanes, polyetherketones and polysulfones, said heating being performed at a temperature and for a period which are sufficient to achieve a reaction of heat decomposition of the norbornere cycles with release of cyclopentadiene causing the expansion of said composition, and under a pressure lower than that under which the cyclopentadiene is no longer released.

2. Expanded material according to claim 1, characterized in that said oligomer resin with nadimide or methyl-nadimide ends is chosen from the polyimides meeting the general formula 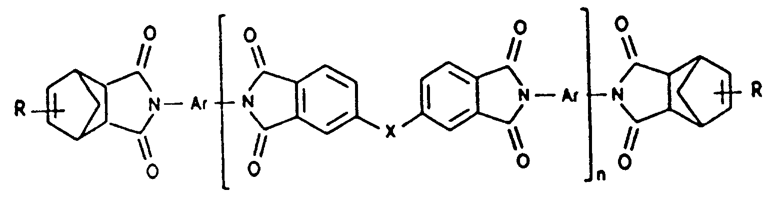 in which Ar represents a carboxyclic or heterocyclic divalent aromatic radical, whose two valences are located on separate carbon atoms: X represents a single bond or a divalent atom or grouping chosen from -O-; -S-; -SO₂-; -CH₂-; CF₂-; -C(CH₃)₂-; -C(CF₃)₂; -COO-; -CHOH-, n represents the degree of polycondensation of the polyimide chain and R represents a hydrogen atom or a methyl radical.

3. Expanded material according to claim 2, characterized in that said oligomer resin with nadimide or methyl-nadimide ends is of the polybenzhydrolimide type, X representing -CHOH- in the formula.

4. Expanded material according to one of the claims 1 to 3, characterized in that said thermoplastic linear polymer is a polyetherimide, an arylaliphatic polyimide or a polyethersulfone.

5. Expanded material according to one of the claims 1 to 4, characterized in that said composition comprises 80 to 99% by weight of at least one oligomer resin with nadimide or methyl-nadimide ends and 1 to 20% by weight of at least one thermoplastic linear polymer.

6. Expanded material according to one of the claims 1 to 5, characterized in that the heating of said composition comprises a final stage of at least 30 minutes at a temperature from 210°C to 350°C.

7. Expanded material according to one of the claims 1 to 6, characterized in that said heating is performed under a pressure of 0.08 to 0.12 MPa.

## Patentansprüche

1. Expandiertes (geschäumtes) Material, dadurch gekennzeichnet, daß es erhalten wird nach einem Verfahren, das umfaßt das Erwärmen einer Zusammensetzung, enthaltend
50 bis 99 Gew.-% mindestens eines wärmehärtbaren Oligomer-Harzes mit Nadimid- oder Methylnadimid-Endgruppen, hergestellt aus der [2,2,1]-Bicyclo-5-hepten-2,3-dicarbonsäure (Nadinsäure) oder einem ihrer Derivate und der Methylnadinsäure oder einem ihrer Derivate, wobei das Harz eine zahlenmittlere Molekularmasse von 1000 bis 10 000 hat und dargestellt wird durch die allgemeine Formel 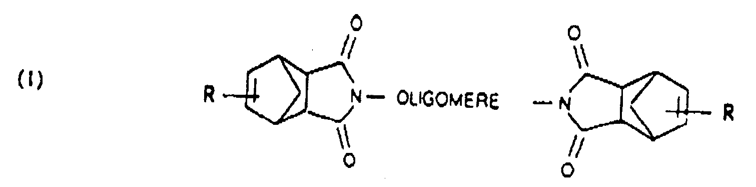 in welcher der zentrale Abschnitt "Oligomere" für ein Polymer oder eine Mischung von Polymeren steht, ausgewählt aus den Polyamiden, Polyestern, Polyäthern, Polyketonen, Polysulfonen, Polysulfiden und Polyamiden, dessen (deren) zahlenmittlere Molekularmasse 600 bis 10 000 beträgt; und
1 bis 50 Gew`-% mindestens eines thermoplastischen linearen Polymers, ausgewählt aus den Polysulfiden, Polyätherimiden, linearen arylaliphatischen Polyimiden, Polyimidsiloxanen, Polyätherketonen und Polysulfonen,
wobei die Erwärmung bei einer Temperatur und für eine Zeitspanne durchgeführt wird, die ausreichen, um die Reaktion zur thermischen Zersetzung der Norbornen-Cyclen zu bewirken unter Freisetzung von Cyclopentadien, das die Expansion (Verschäumung) der genannten Zusammensetzung hervorruft, wobei der Druck unterhalb desjenigen liegt, bei dem das Cyclopentadien nicht mehr freigesetzt wird.

2. Expandiertes Material nach Anspruch 1, dadurch gekennzeichnet, daß das genannte Oligomer-Harz mit Nadimid- oder Methylnadimid-Endgruppen ausgewählt wird unter den Polyimiden der allgemeinen Formel 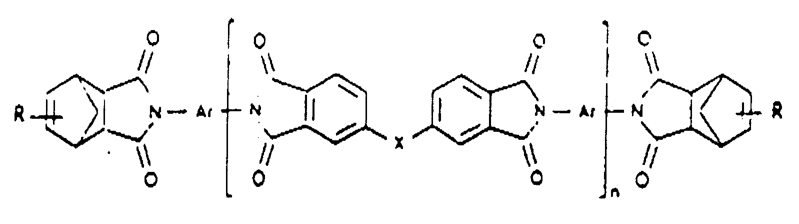 in der bedeuten:
Ar einen carbocyclischen oder heterocyclischen divalenten aromatischen Rest, dessen zwei Valenzen an unterschiedlichen Kohlenstoffatomen vorliegen,
X eine Einfachbindung oder ein divalentes Atom oder eine divalente Gruppe, ausgewählt aus -O-; -S-; -SO-; -SO₂-; -CH₂-; -CF₂-; -C(CH₃)₂-; -C(CF₃)₂-; -COO-; -CHOH-,
R ein Wasserstoffatom oder einen Methylrest und
n den Polykondensationsgrad der Polyimid-Kette.

3. Expandiertes Material nach Anspruch 2, dadurch gekennzeichnet, daß das genannte Oligomer-Harz mit Nadimid- oder Methylnadimid-Endgruppen ein solches vom Polybenzhydrolimid-Typ ist, bei dem X in der Formel für -CHOH-steht.

4. Expandiertes Material nach einem der Ansprüche 1 bis 3, dadurch gekennzeichnet, daß das genannte thermoplastische lineare Polymer ein Polyätherimid, ein arylaliphatisches Polyimid oder ein Polyäthersulfon ist.

5. Expandiertes Material nach einem der Ansprüche 1 bis 4, dadurch gekennzeichnet, daß die genannte Zusammensetzung umfaßt
80 bis 99 Gew.-% mindestens eines Oligomer-Harzes mit Nadimid- oder Methylnadimid-Endgruppen und
1 bis 20 Gew.-% mindestens eines thermoplastiachen linearen Polymers.

6. Expandiertes Material nach einem dar Ansprüche 1 bis 5, dadurch gekennzeichnet, daß die genannte Erwärmung der genannten Zusammensetzung eine Endstufe von mindestens 30 min bei einer Temperatur von 210 bis 350°C umfaßt.

7. Expandiertes Material nach einem der Ansprüche 1 bis 6, dadurch gekennzeichnet, daß die genannte Erwärmung unter einem Druck von 0,08 bis 0,12 MPa durchgeführt wird.
